# EUROPEAN PATENT SPECIFICATION

(11) **EP 3 228 433 B1**
(45) Date of publication and mention of the grant of the patent: **05.09.2018**
(21) Application number: 17164501.3
(22) Date of filing: 03.04.2017
(51) Int. Cl.: B29C 44/22, B29C 44/56, B29C 51/14

(54) **METHOD TO MANUFACTURE A MULTI-LAYER COMPOSITE PANEL, IN PARTICULAR FOR INNER COMPONENTS OF MOTOR VEHICLES**
VERFAHREN ZUR HERSTELLUNG EINER MEHRSCHICHTIGEN VERBUNDPLATTE, INSBESONDERE FÜR INNENKOMPONENTEN VON KRAFTFAHRZEUGEN
PROCÉDÉ POUR FABRIQUER UN PANNEAU COMPOSITE MULTICOUCHE, EN PARTICULIER POUR LES COMPOSANTS INTÉRIEURS DE VÉHICULES AUTOMOBILES

(30) Priority: 05.04.2016 IT UA20162290
(43) Date of publication of application: 11.10.2017
(73) Proprietor: LEVA S.P.A. a socio unico, 10095 Grugliasco (TO) (IT)
(72) Inventor: RUSSO, Alberto, 10011 Agliè (TO) (IT)
(74) Representative: Vitillo, Giuseppe

(56) References cited:
- WO-A1-2012/056350
- KR-B1- 100 763 410
- US-A1- 2004 094 986

## Description

### Technical field

The invention relates to a method to manufacture a multi-layer composite panel, in particular for inner components of motor vehicles.

### Technological background

Manufacturing methods for multi-layer composite panels and relative panels are known, which are used as covering for inner components of motor vehicles.

These panels need to be stiff and resistant enough to bear the loads to which they must be subjected. At the same time, the panels must be light and good-looking, due to the fact that they are exposed to the view and to the touch of a user sitting in the motor vehicle. Furthermore, the methods used to manufacture these panels must be simple and economic.

WO 2012/056350 A1 discloses an energy absorber comprising: a plurality of crush lobes including a base and sides extending from the base to an outer wall; and a composite insert in the energy absorber. The insert comprises a second plastic material and reinforcement. The second plastic material is different than the crush lobe material. The insert is located at an area of the crush lobes, and wherein the area is the side and/or the outer wall. In another embodiment, an energy absorber comprises: a plastic frame; thermoplastic crush lobes extending from the frame, wherein the crush lobes comprise an outer wall, an extending wall, and a base; and a plastic insert located at an area having a volume of the crush lobes, wherein the insert occupies less than or equal to 90% of the area volume. The insert comprises reinforcement and a plastic material different than the thermoplastic crush lobes.

KR 100763410 B1 discloses a laminating structure of an interlayer noise prevention body is provided to prevent bottom impact sound, consonance sound, or vibration by laminating synthetic nonwoven fabrics, an EPP (expanded polypropylene), a high specific gravity noise prevention material, and a bubble sheet layer having hollow parts on the interlayer slab. A laminating structure of an interlayer noise prevention body comprises a first synthetic nonwoven fabric layer, an EPP layer, a high specific gravity noise prevention material, a second synthetic nonwoven fabric layer, and a bubble sheet layer. The first synthetic nonwoven fabric layer is laminated on the interlayer slab. The EPP layer is laminated on the first synthetic nonwoven fabric layer. The high specific gravity noise prevention material is laminated on the EPP layer. The second synthetic nonwoven fabric layer is laminated on the high specific gravity noise prevention material. The bubble sheet layer is formed with a plurality of hollow parts. A plurality of corrugated parts are formed on the lower surface of the EPP layer. Air layers are formed between the upper surface of the first synthetic nonwoven fabric layer and the lower surface of the EPP layer.

According to US 2004/094986 A1, a motor vehicle dashboard has a frame structure that can be attached to a motor vehicle body. The dashboard has a first element with a first attachment side and a second attachment side opposite the first attachment side, with the first attachment side of the first element being configured to be adhered to the frame structure. The first element comprises foam. The dashboard has a second element with a first side that is configured to be exposed towards the interior of a motor vehicle, and a second, attachment, side opposite the first side of the second element. The first side of the second element provides a leather-like appearance to the dashboard.

### Summary of the invention

An object of the invention is to provide a method which is improved compared to the ones known from the prior art.

According to the invention, this and other objects are reached by means of a method having the features set forth in the appended independent claim.

The appended claims are an integral part of the technical teaches provided in the following detailed description concerning the invention. In particular, the appended dependent claims define some preferred embodiments of the invention and describe optional technical features thereof.

Further features and advantages of the invention will be best understood upon perusal of the following detailed description, which is provided by way of example and is not limiting, with reference, in particular, to the accompanying drawings, which are briefly described below.

The drawings mentioned below are not drawn to scale, except where specifically indicated, the focus being shifted on showing the principles according to the invention.

The proportions among the elements that can be assumed from the figures do not represent the actual proportions.

### Brief description of the drawings

The single figure is a schematic representation of a panel manufactured by means of a method according to an explanatory embodiment of the invention.

### Detailed description of the invention

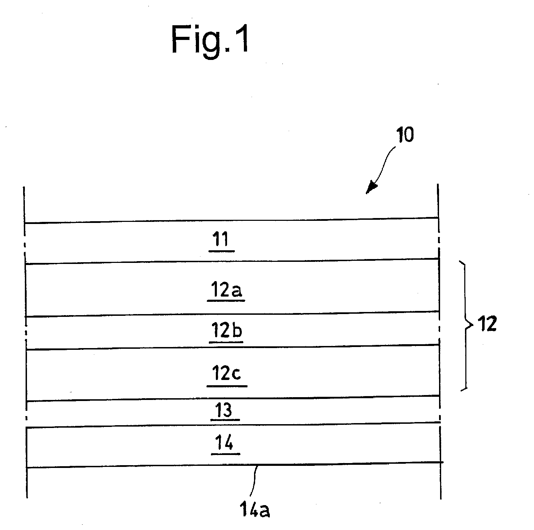

With reference to figure 1, number 10 indicates a multi-layer composite panel manufactured by a method carried out according to an explanatory embodiment of the invention.

In particular, the panel 10 is designed to be used in inner components of motor vehicles, such as loading surface, parcel shelf, door panel, dashboard, tunnel console, etc.

The panel 10 comprises an outer portion 12, which is designed to be visible during use and exposed outwards. Furthermore, the panel 10 comprises a support portion 14, on which the outer portion 12 is fixed and which is designed to fulfill a bearing function and to not be visible during use, but facing inwards.

The outer portion 12 comprises a three-dimensional fabric (the so-called "3D fabric"), i.e. a fabric having a significant thickness that, by mere way of non-exhaustive example, usually ranges from 3 to 16 mm.

Moreover, the three-dimensional fabric is a multi-layer fabric, whose plurality of fabric layers are arranged in a "sandwich-like" manner.

This three-dimensional fabric comprises an outer layer 12a, which faces outwards, is visible during use and is made of an outer fabric consisting of natural and/or synthetic yarn. In the embodiment shown herein, the outer fabric comprises a synthetic yarn, for example polyester or nylon. Alternatively, the outer fabric can also be made of natural yarns, such as cotton.

The three-dimensional layer further comprises a base layer 12c made up of a base fabric. In the embodiment shown herein, the base fabric consists of a synthetic yarn, for example polypropylene.

Furthermore, the three-dimensional fabric comprises an intermediate layer 12b, which is made up of an intermediate fabric of synthetic yarn, for example polyester. Preferably, the synthetic yarn has a reinforcement made of glass fibers or aramid fibers.

The support portion 14 is made of expanded polypropylene and is manufactured, in a known manner, by means of a type of molding known as "particle foaming", in particular with a blowing and sintering process. The process usually takes place by means of high-pressure blowing of expanded polypropylene balls into the cavity of a mold and through a subsequent sintering, heating (for example by generating a steam flow) the expanded polypropylene balls at a temperature that is suited to cause said balls to become coherent with one another.

The panel 10 is manufactured by means of a method including the following operating steps:
- providing the outer portion 12,
- positioning the outer portion 12 in the cavity of a mold, and
- carrying out a particle foaming process of the support portion 14 on the base layer 12c of the outer portion 12 positioned in the mold.

The method further comprises the operating step of applying a thin polyolefin layer or film 13 (usually in solid form) on the outer side of said base layer 12c before the outer portion 12 is inserted into the mold. The assembly consisting of the outer portion 12 and the thin polyolefin layer 13 applied on it is previously subjected to calendering.

Optionally, as it is the case in the embodiment shown herein, the panel 10 can also comprise a look-improving layer, which is applied on the outer layer 12a. The look-improving layer can be, by mere way of example, a leather layer, a layer of artificial leather or of another material having good-looking properties. In the embodiment shown herein, the look-improving layer comprises a leather layer 11, preferably perforated.

The leather layer 11 can be fixed after the support portion 14 has been molded on the base layer 12c. For example, the leather layer 11 can be fixed to the outer layer 12a by means of gluing, in particular cold gluing, for example by means of a water glue, a spray glue, a solid glue or a liquid glue.

Alternatively, the leather layer 11 can be fixed while the support portion 14 is being molded on the base layer 12c. For example, the glue can be applied between the outer layer 12a and the leather layer 11 and be subjected to hot reactivation simultaneously to the molding of the support portion 14. According to this hypothesis, the leather layer 11 preferably is perforated or anyway permeable to air, so as to enable the passage of the air blown during the molding of the support portion 14 on the base layer 12c.

Alternatively to (or, if necessary, in combination with) the application of the leather layer 11, a further optional feature is that of subjecting the outer side 14a of the support portion 14 to a surface finishing process, which, in particular, is designed to cause the outer side 14a of the support portion 14 to become good-looking. For example, the inner face of the mold, facing the outer side 14a of the support portion 14, can be embossed, if necessary through laser. This process is preferably used to allow the outer side 14a to be good-looking and yielding or delicate to the touch, so as to obtain a soft-touch effect. As a matter of fact, in some applications of the panel 10, the outer side 14a of the support portion 14 can face and, hence, be exposed to the view and the contact of a user. The laser is also useful to eliminate possible imperfections on the outer side 14a deriving from the sintering process.

Advantageously, the three-dimensional fabric structure of the outer portion 12 offers an outer layer 12a that is substantially not affected by the coupling - by means of molding - to the support portion 14 made of expanded polypropylene. Indeed, following the molding, the sphere-shaped particles making up the expanded polypropylene create a connection to the base layer 12c, "holding on" to the polypropylene yarn or to the thin polyolefin layer or film 13. This connection can be purely mechanical, in that some particles merge with the base layer 12c through incorporation. Alternatively, this connection can be chemical, in case there is the optional application of the thin polyolefin layer mentioned above. In the mechanical connection as well as in the chemical connection, the sphere-shaped particles tend anyway to create - on the base layer 12c - a deformation of the polypropylene yarn making it up, thus being likely to stretch or loosen it in a nonhomogeneous manner. Advantageously, the intermediate layer 12b "makes up" for the stretching and the loosening of the base layer 12b due to the properties of expanded polypropylene. Furthermore, the intermediate layer 12b prevents the outer layer 12a from being affected by stretching or loosening, which may lead to the development of irregular or not good-looking tensions.

## Claims

1. Method to manufacture a multi-layer composite panel (10), in particular for inner components of motor vehicles; said method comprising the following steps:
- providing an outer portion (12) including a multi-layer three-dimensional fabric comprising
an outer layer (12a) made up of an outer fabric,
a base layer (12c) made up of a base fabric, and
an intermediate layer (12b) arranged in a "sandwich"-like manner between said outer layer (12a) and said base layer (12c) and made up of an intermediate fabric comprising a synthetic yarn, for example polyester; and
- positioning said outer portion (12) in the cavity of a mold;
- carrying out a particle foaming process of a support portion (14) made of expanded polypropylene on said base layer (12c) of said outer portion (12) positioned in said mold;
- applying a thin polyolefin layer or film (13) on the outer side of said base layer (12c) before said outer portion (12) is inserted into the mold; and
- subjecting the assembly consisting of said outer portion (12) and said thin polyolefin layer or film (13) to a calendering process prior to the insertion into said mold.

2. Method according to any of the previous claims, comprising, furthermore, the step of applying a look-improving layer (11) on said outer layer (12a).

3. Method according to claim 2, wherein said look-improving layer comprises a leather layer, a layer of artificial leather or of another material having good-looking properties.

4. Method according to any of the previous claims, comprising, furthermore, the step of subjecting the outer side (14a) of said support portion (14) to a surface finishing process.

5. Method according to any of the previous claims, wherein the outer fabric comprises at least one between a natural yarn, for example cotton, and a synthetic yarn, for example polyester and/or nylon.

6. Method according to any of the previous claims, wherein the base fabric comprises a synthetic yarn, for example polypropylene.

7. Method according to any of the previous claims, wherein said synthetic yarn of said intermediate layer (12b) is reinforced, for example with glass fibers or aramid fibers.

## Patentansprüche

1. Verfahren zur Herstellung einer mehrschichtigen Verbundplatte (10), insbesondere für Innenkomponenten von Kraftfahrzeugen;
wobei das Verfahren die folgenden Schritte umfasst:
- Bereitstellen eines äußeren Abschnitts (12) mit einem mehrschichtigen dreidimensionalen Gewebe, umfassend
eine äußere Schicht (12a), die aus einem äußeren Gewebe aufgebaut ist,
eine Basisschicht (12c), die aus einem Basisgewebe aufgebaut ist, und
eine Zwischenschicht (12b), die in einer "sandwichartigen" Weise zwischen der äußeren Schicht (12a) und der Basisschicht (12c) angeordnet ist und aus einem Zwischengewebe aufgebaut ist, das ein synthetisches Garn, beispielsweise Polyester umfasst; und
- Positionieren des äußeren Abschnitts (12) in dem Hohlraum einer Form;
- Ausführen eines Partikelschäumverfahrens eines Stützabschnitts (14) aus expandiertem Polypropylen auf der Basisschicht (12c) des äußeren Abschnitts (12), der in der Form positioniert ist;
- Aufbringen einer dünnen Polyolefinschicht oder -folie (13) auf die Außenseite der Basisschicht (12c), bevor der äußere Abschnitt (12) in die Form eingeführt wird; und
- Unterziehen der aus dem äußeren Abschnitt (12) und der dünnen Polyolefinschicht oder -folie (13) aufgebauten Anordnung einem Kalandrierverfahren vor dem Einführen in die Form.

2. Verfahren nach einem der vorhergehenden Ansprüche, umfassend weiterhin den Schritt des Auftragens einer aussehenverbessernden Schicht (11) auf die äußere Schicht (12a).

3. Verfahren nach Anspruch 2, wobei die aussehenverbessernde Schicht eine Lederschicht, eine Schicht aus Kunstleder oder einem anderen Material mit gutaussehenden Eigenschaften umfasst.

4. Verfahren nach einem der vorhergehenden Ansprüche, umfassend weiterhin den Schritt des Unterziehens der Außenseite (14a) des Stützabschnitts (14) einem Oberflächenveredelungsverfahren.

5. Verfahren nach einem der vorhergehenden Ansprüche, wobei das äußere Gewebe mindestens eines zwischen einem natürlichen Garn, beispielsweise Baumwolle, und einem synthetischen Garn, beispielsweise Polyester und / oder Nylon, umfasst.

6. Verfahren nach einem der vorhergehenden Ansprüche, wobei das Basisgewebe ein synthetisches Garn, beispielsweise Polypropylen umfasst.

7. Verfahren nach einem der vorhergehenden Ansprüche, wobei das synthetische Garn der Zwischenschicht (12b) beispielsweise mit Glasfasern oder Aramidfasern verstärkt ist

## Revendications

1. Procédé pour fabriquer un panneau composite multicouche (10), en particulier pour des composants intérieurs de véhicules à moteur ; ledit procédé comprenant les étapes suivantes :
- fourniture d'une portion extérieure (12) incluant un tissu tridimensionnel multicouche comprenant une couche extérieure (12a) constituée d'un tissu extérieur,
une couche de base (12c) constituée d'un tissu de base, et
une couche intermédiaire (12b) agencée à la manière d'un « sandwich » entre ladite couche extérieure (12a) et ladite couche de base (12c) et constituée d'un tissu intermédiaire comprenant un fil synthétique, par exemple du polyester ; et
- le positionnement de ladite portion extérieure (12) dans la cavité d'un moule ;
- la réalisation d'un processus de moussage de particule d'une portion de support (14) constituée de polypropylène expansé sur ladite couche de base (12c) de ladite portion extérieure (12) positionnée dans ledit moule ;
- l'application d'une couche ou d'un film de polyoléfine fin (13) sur le côté extérieur de ladite couche de base (12c) avant que ladite portion extérieure (12) soit insérée dans le moule ; et
- la soumission de l'ensemble constitué de ladite portion extérieure (12) et de ladite couche ou dudit film de polyoléfine fin (13) à un processus de calandrage avant l'insertion dans ledit moule.

2. Procédé selon l'une quelconque des revendications précédentes, comprenant, de plus, l'étape d'application d'une couche améliorant l'aspect (11) sur ladite couche externe (12a).

3. Procédé selon la revendication 2, dans lequel ladite couche améliorant l'aspect comprend une couche de cuir, une couche de cuir artificiel ou d'un autre matériau ayant des propriétés de bon aspect.

4. Procédé selon l'une quelconque des revendications précédentes, comprenant, de plus, l'étape de soumission du côté extérieur (14a) de ladite portion de support (14) à un processus de finition de surface.

5. Procédé selon l'une quelconque des revendications précédentes, dans lequel le tissu extérieur comprend au moins un élément entre un fil naturel, par exemple du coton, et un fil synthétique, par exemple du polyester et/ou du nylon.

6. Procédé selon l'une quelconque des revendications précédentes, dans lequel le tissu de base comprend un fil synthétique, par exemple du polypropylène.

7. Procédé selon l'une quelconque des revendications précédentes, dans lequel ledit fil synthétique de ladite couche intermédiaire (12b) est renforcé, par exemple avec des fibres de verre ou des fibres d'aramide.
